# EUROPEAN PATENT APPLICATION

(11) **EP 1 602 524 A2**
(43) Date of publication of application: **07.12.2005**
(21) Application number: 05010651.7
(22) Date of filing: 17.05.2005
(51) Int. Cl.: B60N 2/235

(54) **Reclining device for an automobile seat**

(30) Priority: 18.05.2004 KR 2004035216
(71) Applicant: DAS Co., Ltd., Kyung Ju, Kyung Buk (KR)
(72) Inventor: Lee, Jae Hwan, 897-6, Kyung Ju, Kyung Buk (KR)
(74) Representative: Klunker . Schmitt-Nilson . Hirsch

(57) **Abstract**

The present invention relates to the reclining device for adjusting automobile back support seat, and provides a reclining device for automobile seat comprising a lower plate and an upper plate which are attached to the cushion frame and back-support frame of an automobile seat respectively, and which are connected by the shaft that goes through the center hole of each plate; a lock gear, which engages and disengages with the gear teeth that are formed in the upper plate or the lower plate; a cam which pressurizes the lock gear towards the gear teeth in connection with the rotation of the shaft; and a pair of lock levers fixed upon a hinge pin, where one end of the lock lever contact with the cam, and the other end makes contact or moves away from the side of the lock-gear as the cam rotates.

## Description

### FIELD OF THE INVENTION

The present invention relates to the reclining device for automobile's seats. More precisely, it relates to a reclining device that has been improved to support the lock gear, which forms the reclining device, in a stable state.

### BACKGROUND OF THE INVENTION

A reclining device is a device which allows the driver and the passenger of an automobile to control the angle of the back support for the front seats.

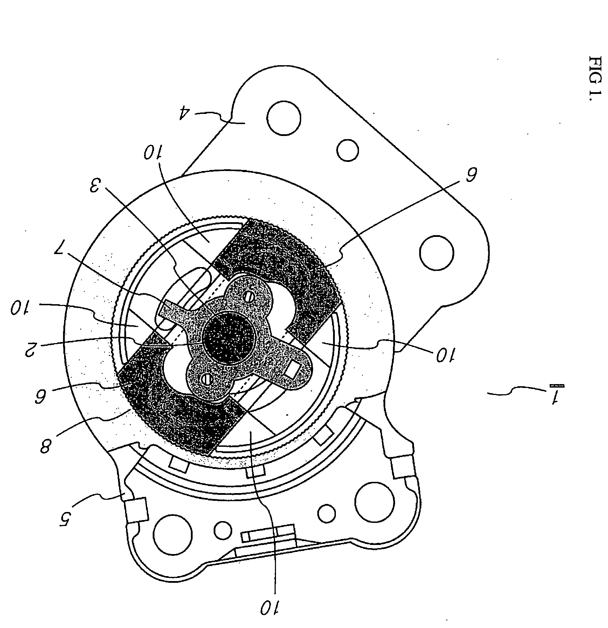

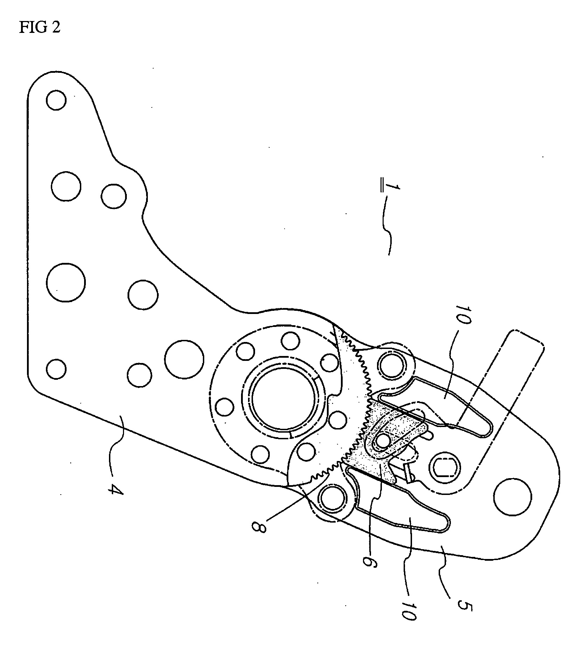

The FIG. 1 and 2 illustrate a conventional reclining device. the reclining device (1) includes a lower plate (4) which is fixed to the cushion frame and an upper plate (5) which is fixed to the back-support frame. The lower plate (4) and upper plate (5) are combined by the shaft (3), which passes through the central hole (2) of each plate, to enable relative rotation.

The recliner includes lock-gear (6) and cam (7) which is located within the space between the lower plate (4) and upper plate (5). The lock-gear (6) engages and disengages with the gear tooth (8), which is formed at the bottom side of the upper plate(5), which allows the angle of the back support to be controlled.

Different to this recliner, outer-type recliner includes a gear tooth (8) which is formed at the lower plate (4), and the lock gear (6) is fixed at the exterior of the upper plate (5).

Both the inner-type and outer-type recliner includes a pair of guide (10), which protrudes from the upper plate (5), and enables the lock-gear to slide between the guides. As stated above, if the lock status is maintained by the engagement of the lock-gear and gear tooth, the torque force, which is formed by the passenger's load on the back-support, is transferred to the lock-gear, thus, the lock-gear is exposed to substantial load. The load which is received by the above lock-gear also transfers to the guide, which contacts with the lock-gear, and the guide receive substantial fatigue.

As fatigue accumulates, it can result in damages to the recliner's parts, or separation of the lock-gear and the upper plate's guide at the guide's weakest position. This fails to carry out the primary function of the reclining device, which is to guide the lock-gear while maintaining the stable state.

### SUMMARY OF THE INVENTION

The present invention provides improved reclining device which include pair of lock levers, where one ends of the lock lever contact with the side of the lock-gear and the other ends contact with the cam to circulate the load that is transferred to the lock-gear. This reclining device enables the lock state to be maintained stably.

### BRIEF DESCRIPTION OF THE DRAWINGS

The accompanying drawings, which are incorporated in and constitute a part of the specification, illustrate an embodiment of the invention, and, together with the description, serve to explain the principles of the invention, where:
FIG.. 1 illustrates the conventional inner-type reclining device for the seat of an automobile.
FIG. 2 illustrates the conventional outer-type reclining device for the seat of an automobile.
FIG. 3 is an exploded view of one exemplary embodiment of an inner-type of the reclining device according to the present invention.
FIG. 4 is an assembled view of one exemplary embodiment of an inner-type of the reclining device according to the present invention.
FIG. 5 is a partial section-view of the lock-gear and the guide according to the present invention.
FIG 6 is an exploded view of one exemplary embodiment of an outer-type of the reclining device according to the present invention.
FIG. 7 is an assembled view of an outer-type reclining device of FIG. 6.

### DETAILED DESCRIPTION OF THE PREFERRED EMBODIMENTS

The present invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy the applicable legal requirements.

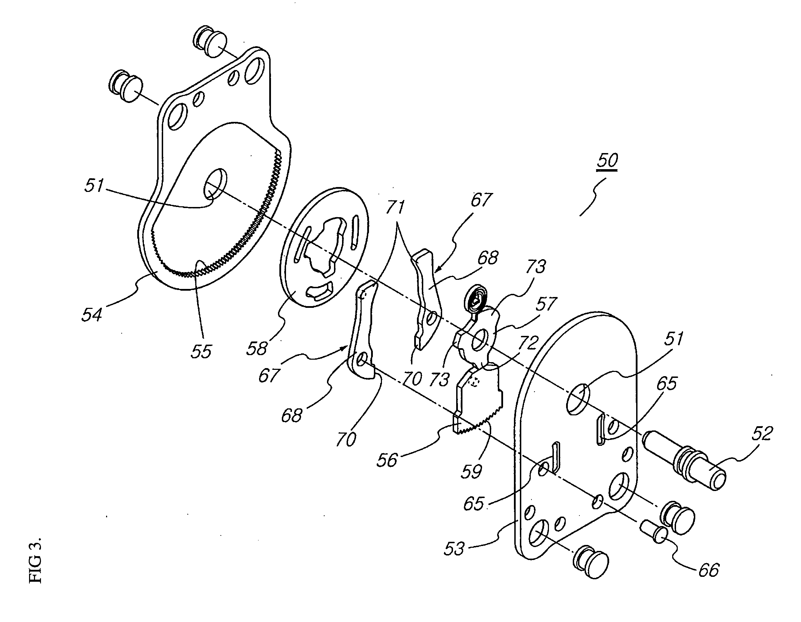

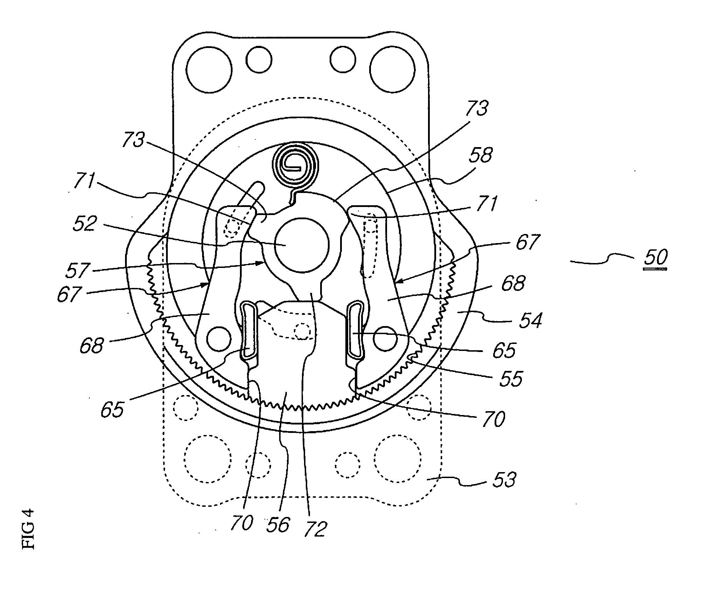

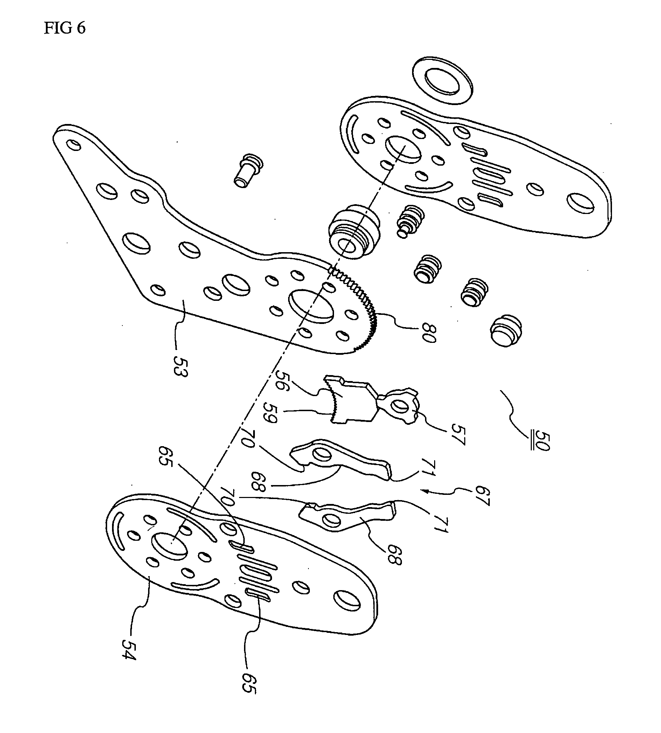

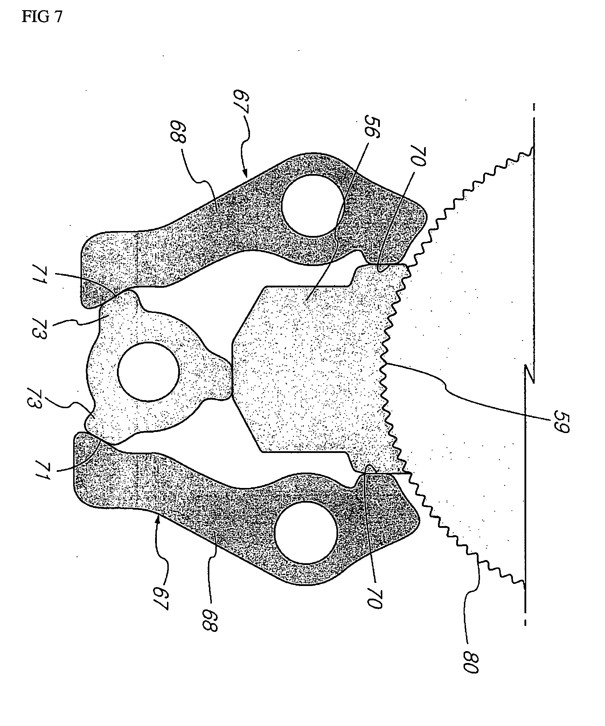

The present invention can be applied to the inner-type reclining device, which are illustrated by FIG. 3 and 4, and also to the outer-type reclining device, which are illustrated by FIG. 6 and 7.

As illustrated by FIG. 3 and 4, the inner-type reclining device (50) according to the present invention further comprise a pair of lock levers upon the conventional inner-type reclining device, where one ends of the lock lever (57) contact with the side of the lock-gear (56) and the other ends contact with the cam to circulate the load that is transferred to the lock-gear (56).

The inner-type reclining device (50) includes a lower plate (53) which is fixed to the cushion frame and an upper plate (54) which is fixed to the back-support frame. The lower plate (53) and upper plate (54) are combined by the shaft (52), which passes through the central hole of each plate, to enable relative rotation.

The inner-type recliner(50) includes lock-gear (56) and cam (57) which is located within the space between the lower plate (53) and upper plate (54). The lock-gear (56) engages and disengages with the gear tooth which is formed at the bottom side of the upper plate(54) which allows the angle of the back support to be controlled. The lever spring is installed at the side of the lower plate (53) to provide the shaft (52) returning force. The return spring, which contacts and pressurizes cam, is attached at the side of the cam (57).

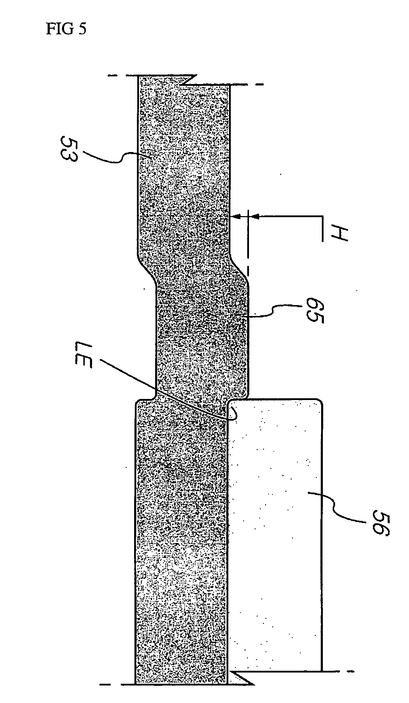

A pair of lock guides (65) are formed at the lower plate (53), and the lock-gear (56) slides between the guides. As illustrated in FIG. 5, the protruding height (H) of the lock guide (65) just has to be sufficient enough to prevent lock-gear (56) escaping from the guides by supporting the lower part (LE) of lock-gear(56) when the lock-gear slides due to the rotation of cam (57) and cam plate (58).

The lock levers (67) connect with the lower plate (53) by the hinge pin (66), and pivots around the axis of the hinge pin(66)

Lock levers (67) comprises the flat lever-body(68), where the gear-supporting part (70) which is formed at the end of lever-body(68) and extends toward the lock levers (67), and contact the sides(69) of lock-gear(56) and support the lock-gear.

At the other end of the lever-body (68), the cam contacting part (71) is formed and extends toward the cam (57). Also, at the upper part of the lever-body, a protruding part is formed and inserted into the slot of the cam plate (58).

The cam comprises gear pushing part (72) which extends in radial direction and pushes the lock-gear (56) to engage with the upper-tooth, and lever pushing part (73) which protrudes in radial direction to push lock levers (67) to support the lock gear (56).

FIG 6 is an exploded view of one exemplary embodiment of an outer-type of the reclining device according to the present invention. Apart from the fact that the lock-gear (56) and the cam (57) is installed at the side of upper plate (54) and the lock tooth (59) of the lock-gear (56) engages with the lower tooth (80) which is formed at the lower plate (53), the basic mechanism of the outer-type recliner is same as the inner-type recliner.

The function of the above two embodiment is as follows. When a driver/passenger pulls the control lever to control the angle of the back-support, the shaft (52) and the cam plate (57) rotates. According to the rotation of the cam plate (57), the lock gear (59), which is connected with the slot of the cam plate, slides toward the cam and becomes disengaged. In such disengaged state, the lock lever, which is connected with the slot of the cam plate by protrusion, moves toward the cam and the gear supporting part (70) of the lock lever moves away from the lock gear (56).

When the driver/passenger releases the control lever after the back-support has been adjusted in desired angle, the shaft (52) and the connected cam rotates back due to the return spring or lever spring. Due to the rotation, the gear pushing part (72) of the cam (57) pushes the lock gear and the lock gear (56) becomes engaged with the tooth (55). Simultaneously, in such engaged state, the lever pushing part (73) of the cam (57) pressurizes the cam connecting part (71) of the lock lever (67) outwards, thus, the lock lever (67) rotates around the axis of the hinge pin (66) and the gear supporting part of the lock lever contacts the side (69) of the lock gear (56) and supports the lock gear.

When looking at the load transfer in such constitution, the right load which is transferred to the lock gear (56) in the engaging state is then transferred to the cam through the right lock lever (67). From the cam (57), it is again transferred back to the lock gear (56) in anti-clockwise direction, forming a circle. The left load is transferred to the cam through the left lock lever (67), and from the cam (57) it is again transferred back to the lock gear (56) in clockwise direction, forming a circle.

Such circulation of load enhances the engagement force, and prevents the constituents of the reclining device (50) from damage and fatigue. In the above embodiments, the cam and the cam plate moves the lock gear back and forth to control the engaging and disengaging states. However, the same principle can also apply to recliners where only the cam is used to move the lock gear back and forth.

## Claims

1. A reclining device for automobile seat comprising
a lower plate and an upper plate which are attached to the cushion frame and back-support frame of an automobile seat respectively, and which are connected by the shaft (52) that goes through the center hole of each plate,
a lock gear, which engages and disengages with the gear teeth that are formed in the upper plate (54) or the lower plate,
a cam which pressurizes the lock gear towards the gear teeth in connection with the rotation of the shaft, the reclining device comprising
a pair of lock levers fixed upon a hinge pin, where one end of the lock lever contact with the cam, and the other end makes contact or moves away from the side of the lock-gear as the cam rotates.

2. The recliner of claim 1, wherein
the cam have a number of protrusion, which protrude in radial direction, and when the cam rotates, the protrusion pressurizes the lock levers outward.

3. The recliner of claim 1, wherein
the recliner further comprises cam plate, which has a slot in which a protrusion of the lock gear is inserted, moves the lock gear toward the cam in connection with the rotation of the shaft.

4. The recliner of claim 3, wherein
the cam plate further comprises a slot where a protrusion of the lock lever is inserted and swings the lock lever around the axis of the hinge pin in connection with the rotation of the cam plate.
